# EUROPEAN PATENT SPECIFICATION

(11) **EP 3 333 043 B1**
(45) Date of publication and mention of the grant of the patent: **28.04.2021**
(21) Application number: 17161144.5
(22) Date of filing: 15.03.2017
(51) Int. Cl.: B61L 23/04, B61L 27/04, B61L 15/00, B61K 9/08, B61K 9/10

(54) **RAIL INSPECTION SYSTEM AND METHOD**
SCHIENENINSPEKTIONSSYSTEM UND -VERFAHREN
PROCÉDÉ ET SYSTÈME D'INSPECTION DE RAIL

(30) Priority: 08.12.2016 EP 16380036
(43) Date of publication of application: 13.06.2018
(73) Proprietor: Siemens Rail Automation S.A.U., 28760 Tres Cantos (Madrid) (ES)
(72) Inventor: LÁZARO ENGUITA, Alberto, 28804 Alcala Henares (ES)
(74) Representative: Siemens Patent Attorneys

(56) References cited:
- DE-A1-102014 119 095
- US-A1- 2007 163 352
- US-A1- 2013 317 676

## Description

The present invention concerns a system and a method for automatically inspecting a rail of a track along which a guided vehicle may travel.
The present invention is in particular directed to the automatic detection of rail defects at points along a rail over which guided vehicles may travel. A "Guided vehicle" according to the present invention refers to any rail transport means running on at least one rail supporting a wheel of said guided vehicle, said rail transport means being for instance public transport means like subways, trains or train units, etc., as well as load transporting means such as, for example, overhead traveling cranes, freight trains, for which safety is a very important factor and for which rail defects may affect said safety and cause accidents. By defects it has to be understood any local deterioration of the mechanical properties of a rail that may result from its manufacturing, and/or from its installation/handling, and/or from its interaction with wheels of guided vehicles running on said rail which typically lead to structural degradation of the rail, and/or from its interaction with the natural environment surrounding the rail (e.g. corrosion due to seaside location of a rail). The rail is an essential element of the railway that experiences large and repetitive stresses and strains which may cause rail failures. Usual inspection of rails is thus an important task in order to keep the railway system as safe as possible, in order to avoid for instance derailment of guided vehicles.
Nowadays, inspection systems typically equip manned guided vehicles that travel at low speed over the rail to be inspected, said inspection system allowing an operator located on-board the manned guided vehicle to detect and locate a rail defect or failure, which has then to be hand verified immediately by a maintenance team. The detected defects can then be automatically classified into different types, like bulk defects of a rail head, horizontal cracking of a rail head, or surface-breaking defects as disclosed in US 2007/0163352 A1. Such a classification according to the type of a defect is also disclosed in DE 10 2014 119 095 A1.

An objective of the present invention is to propose a method and system for improving the inspection and maintenance of rails of a railway system, notably by providing a more efficient management of the detected rail defects.

This objective is solved by the measures taken in accordance with the independent claims. Further advantageous embodiments are proposed by the dependent claims.
According to an aspect of the invention, an automatic rail inspection system (hereafter ARIS) is proposed for automatically inspecting a rail system, carrying out for instance a detection and localization of rail defects of said rail system. Preferentially, ARIS is an autonomous robot capable of autonomously moving on a rail track while inspecting each rail over which it is running. According to the present invention, ARIS is further configured for automatically classifying the detected defects in a list of detected defects, and for updating said list at each new defect that is detected. According to the present invention, each newly detected defect is thus classified in said list comprising previously detected defects, wherein said list establishes a ranking among all detected defects, said ranking representing the order according to which the detected defects have to be repaired. Said list and any update of said list might be transmitted in real time to a remote module of the ARIS, said remote module being configured for providing a maintenance team with a display of said list of detected defects and for updating said list in real time in function of each new detected defect according to the list update, wherein the first element of said list indicates to the maintenance team the first defect to be repaired and the following subsequent elements of the list represent the next defects to be repaired in the order in which they have to be repaired. According to the present invention, the ARIS is able to classify the defects to be repaired according to an order that optimizes the efficiency of the reparations of said defects by the maintenance team, improving therefore the safety of the rail system.
According to another aspect of the present invention, a method for inspecting a rail of a track is proposed. Said method comprises notably the following steps:
- using an automatic, and preferentially autonomous, rail inspection system for detecting and locating defects of a rail of a track for guided vehicles;
- automatically classifying the detected defects in a list of detected defects and updating said list at each new detected defects;
- remotely displaying said list and any update of said list to a maintenance team, wherein the first element of said list indicates to the maintenance team the first defect to be repaired and the following subsequent elements of the list represent the next defects to be repaired in the order in which they have to be repaired so as to ensure safety of the rail and efficiency of the reparations.
Further aspects of the present invention will be better understood through the following drawing:

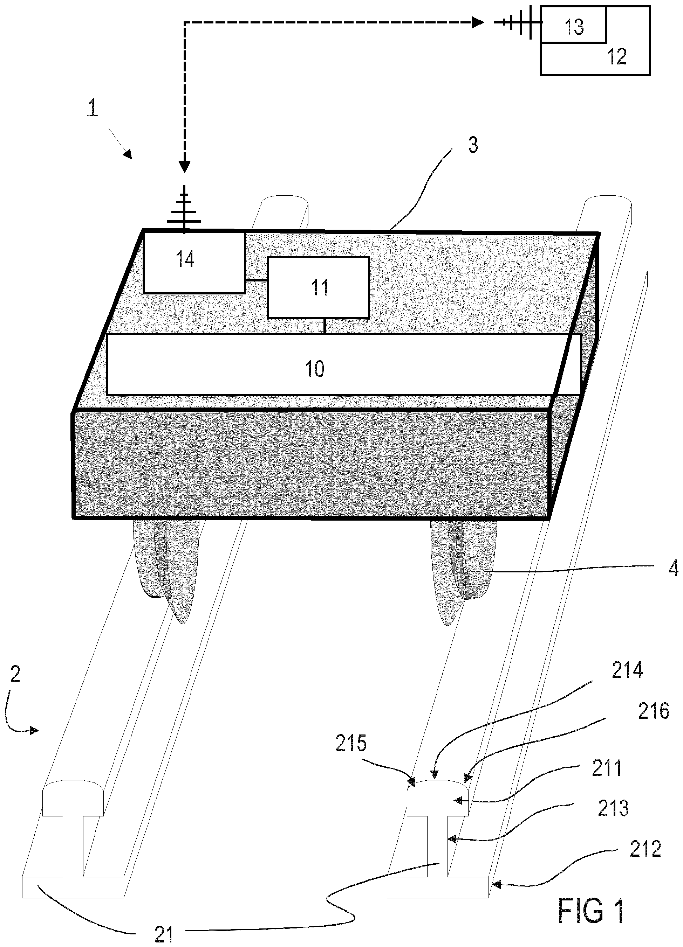

- Figure 1: schematic representation of an automatic rail inspection system according to the invention.

Figure 1 shows a preferred embodiment of an ARIS 1 according to the invention configured for inspecting rails of a rail system. A rail 21 has a well-defined structure comprising typically a foot 212, a web 213 and a head 214 that serves as running surface 214 for wheels of guided vehicles. Said ARIS 1 may be installed on-board such a guided vehicle, inspecting in this case the rail 21 during the moving of the guided vehicle over said rail 21, or may be a completely autonomous system, which is autonomously moving over a rail 21 and configured for inspecting the latter. For instance, Figure 1 depicts a preferred embodiment of the invention wherein the ARIS 1 is a robot that is configured for autonomously moving on rails 21 of a track 2.

The ARIS 1 comprises in particular the following features:
- a rail defect detection system 10 using preferentially a non-destructive testing technique for detecting and characterizing a defect of the rail and a position determination technique for determining a location of the detected defect within the rail system. The rail defect detection system is further configured for outputting measurement data that are data resulting from the inspection of the rail when applying said non-destructive techniques to the rail, i.e. data outputted from devices used for inspecting the rail by means of said non-destructive techniques. Of course, the rail defect detection system 10 might be able to inspect each rail of the track by using the above-mentioned techniques;
- the processing unit 11 receiving measurement data from the rail defect detection system and configured for processing said measurement data in order to determine for each detected defect at least the following defect characteristics: a physical size of each detected defect, a position of the detected defect with respect to the rail structure, and a location of the detected rail defect within the rail system, which may comprise an indication regarding which rail of the track comprises said detected defect;
- a defect classification module 12 designed for collecting defect characteristics of each detected defect and classifying the detected defects in a list of defects to be repaired and for providing said list to a maintenance team, said defect classification module being installed either on-board the vehicle carrying the rail defect detection system 10 and moving on the rail to be inspected, for instance on-board the robot shown in Fig. 1, or remotely from the vehicle carrying the rail defect detection system 10, for instance at a remote control center. Preferentially, the defect classification module comprises a communication device 13 and is further configured for transmitting said list to a maintenance team by means of said communication device 13;
- optionally, the ARIS 1 according to the invention comprises another communication device 14, notably if the defect classification module 12 is installed remotely compared to the vehicle carrying the rail defect detection system 10 and moving on the rail to be inspected, said another communication device being configured in particular for providing the defect classification module of the ARIS 1 with said defect characteristics for each detected defect.

The rail defect detection system 10 comprises one or several devices for detecting a defect of the rail by using one or several non-destructive testing techniques. Non-destructive techniques used for testing and inspecting a rail are known by the skilled man and might be found in the literature. We cite hereafter few examples of devices that are commonly used for inspecting a rail and that might equip the rail defect detection system. Said devices are for instance:
- one or several cameras configured for capturing images of the rail while the vehicle carrying the ARIS is moving along said rail. In this case, the measurement data are the images captured by each camera and the processing unit 11 is configured for analyzing the images acquired by each camera in order to determine if the rail comprises defects, such as damage surface, missing components, rail break, cracks, wear, deformation, etc.;
- one or several ultrasonic transducers comprising a transmitter for transmitting ultrasonic waves to the rail surface and a receiver for sensing the response of the rail to the ultrasonic waves, wherein the measurement data are in this case the sensed response. The transmitter and the receiver might be a same device working in a pulse-echo mode or two separate devices placed at different locations on the rail surface. The ultrasonic transducer allows to detect sub-surface defects, i.e. internal defects such as cracks and discontinuities;
- one or several electromagnetic acoustic transducers configured for inducing radio frequency eddy currents in a part of the rail while said part is submitted at the same time to a strong magnetic field, and a receiver for sensing the ultrasonic waves resulting in the rail from the electromagnetic excitation, the measurement data being in this case a function of the sensed ultrasonic waves;
- one or several pulsed lasers for generating ultrasonic waves in the rail coupled to an optical receiver configured for detecting ultrasound after its propagation in the rail, the measurement data being in this case a function of the detected ultrasound.

Since non-destructive techniques for inspecting a rail are well known by the skilled man, no further explanations are needed here. According to the present invention, several non-destructive techniques might be combined in order to improve the characterization of the defects, so that for each defect, a physical size and position within the rail might be determined by the processing unit 11 from the measurement data. Preferentially, the rail defect detection system 10 comprises two sets of devices using non-destructive techniques for inspecting a rail, a first set for inspecting one of the pair of rails 21 on which the vehicle carrying the ARIS is moving, and a second set for inspecting the other rail of said pair of rails 21, the first set and the second set being preferentially identical and both connected to the processing unit 11 for providing said measurement data for each rail of the pair of rails 21.

According to the present invention, the rail defect detection system 10 further comprises a position determination device for determining the location of each detected defect with respect to the railway system. Said position determination device is for instance capable of determining the geographic coordinates of each defect or a distance separating the defect from a reference point on the railway system, so that easy retrieval of the location on the rail where the defect was detected is enabled. The position determination device might comprise for instance a Global Positioning System capable of providing the geographic coordinates of each detected defect, and/or an odometer for measuring the distance separating the location of the defect from a reference point of the railway system. Optionally, the position determination device is able to further use a marker for indicating the position of the detected defect, said marker being for instance directly put on the rail or in its surrounding environment so that the defect can easily be found by a maintenance team from the marker position, said marker being for instance a specific painting on the rail or its surrounding environment that is for instance specifically configured for being detected by a camera system of a vehicle used by the maintenance team for repairing the defect rails. The position determination device is thus able to measure a position of the defect compared to the railway system and the measured position data are included in the measurement data provided to the processing unit 11 by the rail defect detection system 10.

The processing unit 11 according to the invention comprises for instance one or several processors and memories. The processing unit 11 is configured for processing the measurement data provided by the rail defect detection system 10 in order to characterize each detected defect by a physical size, a position within the rail structure and a location with respect to the railway system. Preferentially, the processing unit 11 is configured for determining a length, a width and a height for each detected defect, wherein said length, width and height correspond preferentially to the smallest length, width and height of a parallelepiped including the detected defect. In case of 1-dimension or 2-dimensions defects, the width and/or height of the parallelepiped are for instance zero. Preferentially, the defect characteristic called "physical size" is then the maximal value among the determined length, width and height of the detected defect. Optionally or alternatively, the processing unit 11 is configured for determining the volume of the parallelepiped and/or the area of the biggest surface of the parallelepiped, and providing said volume and/or area as additional defect characteristics for said "physical size" defect characteristic. The physical size characteristic might be thus the maximum length of a defect, an area occupied by a defect (for instance said biggest surface of the parallelepiped), a volume (for instance the volume of said parallelepiped) occupied by a defect, said physical size being obtained by analyzing the measurement data provided by the devices using the non-destructive techniques for inspecting the rail, for instance from images taken by the cameras or an output signal provided by a transducer. Additionally, the processing unit 11 is further configured for determining the position of the detected defect within the rail structure from said measurement data. For this purpose, the processing unit 11 is configured for analyzing the measurement data in order to determine if the rail defect is located for instance:
- on and/or within the head 211 of the rail; and/or
- on and/or within the foot 212 of the rail; and/or
- on and/or within the web 213 of the rail.

From the measurement data, the processing unit 11 is preferentially further capable of refining the determined position of a rail defect with respect to the rail structure by determining if it is located
- on the running surface 214 of the rail; and/or
- on and/or within the gauge corner region 215; and/or
- on and/or within the field corner region 216.
Of course, further refinements might be possible according to the present invention.

Preferentially, the processing unit 11 is able to digitize each image captured by each camera of the rail defect detection system 10 for transforming said captured image into a format that can be used for defect detection. The processing unit 11 is configured for detecting if a defect is comprised in the image acquired by the camera. For this purpose, the processing unit 11 uses in particular an object recognition algorithm. Preferably, the processing unit 11 uses said object recognition algorithm for identifying a presence or absence of rail external defect in each image captured by each camera. In particular, the rail defect detection system may comprise several cameras, each pointing to the rail according to a different angle of view so as to enable a virtual 3-dimensional reconstruction of the rail that may serve for the calculation of the previously mentioned parallelepiped. In particular, the recognition algorithm uses geometric recognition techniques applied to each image or to a part of each image (for example only to the part comprising the rail, wherein the recognition algorithm is capable of recognizing said rail and/or parts of said rail in each image) for identifying defects on said rail. The object recognition algorithm preferentially uses automatic learning techniques such as boosting for identifying objects like the rail and its defects in the images taken by the camera. Techniques such as boosting for identifying objects in images are well known by the skilled man and do not need further explanations.

The processing unit 11 according to the invention is in particular wired or wirelessly connected to the defect classification module 12 in order to provide the latter with the determined defect characteristics, which are at least said physical size, said position within the rail structure and said location within the railway system. The defect classification module 12 is in charge of establishing a repair order of the detected defects for one or several maintenance teams. For this purpose, the defect classification module 12 may comprise one or several processors and a memory for analyzing the defect characteristics in order to establish a classification of the detected defects. The defect classification module 12 is capable of defining an order according to which the detected defects have to be repaired in order to optimize the efficiency of the repairs by each maintenance team and ensure the safety of the railway system. For this purpose, the defect classification module is notably configured for classifying the detected defects in one or several lists wherein each defect appears only in one of said lists, and in each list, the defects are classified according to classification criteria based on the previously determined defect characteristics so that a repair order for the defects is automatically determined within each list, the defect classification module being further configured for dispatching the lists to the maintenance teams so that each maintenance team receives one list that has been specifically created for said maintenance team by the defect classification module 12. Each list is in particular updated in real time in function of newly detected defects.
For this purpose and in particular, the defect classification module 12 is configured for associating weightings to each characteristic of the detected defects and summing the obtained weightings for each detected defect, said detected defects being then classified in a list by the defect classification module 12 according to the obtained sum, for instance the detected defect comprising the highest sum value ranking first in the list and other detected defects comprising smallest sum values being ordered according to decreasing sum values in said list. The weighting according to the invention is a coefficient that is associated to each defect characteristics. For instance, a weighting of 10 is associated to a detected 10cm crack and a weighting of 5 is associated to a detected 5cm crack. Optionally, said list, called hereafter original list, might be split into a number of other lists, called hereafter secondary lists, corresponding to the number of maintenance teams available for repairing the defects, the original list being split in secondary lists in function of the location of each detected defect, so that each secondary list comprises only detected defects within an area of the railway system that is covered by a maintenance team. In other words, each secondary list lists the detected defects comprised in an area of the railway system that is under maintenance of a maintenance team that is authorized to repair defects in said area, and is therefore specifically created for said maintenance team. Preferentially, the ARIS 1 according to the invention might comprise different rail detection systems 10 and processing units 11 installed in different vehicles, each processing unit 11 providing the defect classification module 12 with defect characteristics, said defect classification module 12 centralizing the information about defect characteristics of each detected defect and dispatching in real time lists of repair of said detected defects to each of the maintenance teams, wherein each of said list (secondary list) is specifically created for each team in function of the location of the detected defect and its importance.

According to the present invention, the importance of a defect, and therefore a list might be determined as follows. Preferentially, the defect classification module 12 is configured for associating:
- a weighting W1 to the value S_G of a physical size of a detected defect, said value S_G being the greatest value determined for said physical size among all values S_i of said physical size determined for all other detected defects;
- a weighting Wi to each other value S_i of said physical size determined for the other detected defects wherein the weighting Wi is defined as follows: Wi= S_i/S_G·W1;
- a weighting P1 to the position characteristic of the detected defect if the latter is a surface defect, a weighting P2 if it is an internal defect, a weighting P3 if the defect belongs to the rail head 214, a weighting P4 if it belongs to the rail web 213, a weighting P5 if it belongs to the rail foot 212;
- a weighting Li to the location Xi of the detected defect within the railway system wherein the weighting Li is a function of the number Ni of guided vehicles moving over the rail at said location Xi in function of time (e.g. per month or weeks), wherein the greater said number Ni is, the greater the value of the weighting Li.
Weightings associated to defect characteristics, preferentially each weighting associated to a defect characteristic, like the weightings W1, P1-P5, L1 are preferentially preregistered or predefined in a database of the defect classification module 12. The value S_G is for instance obtained by the defect classification module by comparing values of the physical size of the detected defects. Values for Ni might be stored in said database for locations Xi within the railway network. Said weightings might be determined by simulation of safety risks associated to said defect characteristics, or entered by a user having experience in rail maintenance, and/or updated in function of tests and experiences.

Typical values for the weightings are for instance as follows:
20<W1<60, with W1 = 50 as preferred value;
If the defect is not a surface defect, then preferentially P1 = 0, otherwise 1<P1<10, with P1 = 5 as preferred value;
If the defect is not an internal defect, then preferentially P2 = 0, otherwise 3<P2<15, with P2 = 8 as preferred value;
If the defect does not belong to the rail head, then preferentially P3 = 0, otherwise 5<P3<20, with P3 = 12 as preferred value;
If the defect does not belong to the rail web, then preferentially P4 = 0, otherwise 5<P4<20, with P4= 12 as preferred value;
If the defect does not belong to the rail foot, then preferentially P5 = 0, otherwise 3<P5<15, with P5=7 as preferred value;
1<Li<L1, wherein L1, with 10<L1<50, with preferentially L1=40, is the weighting associated to the location X1 that has the highest number NH of guided vehicles moving over the rail at said location X1 during a period of time T within the railway network, and Li=Ni/NH·L1, wherein Ni is said number of guided vehicle moving over the rail at said location Xi during said period of time T.

An example of automatic classification of detected defects from the weightings associated to the defect characteristics of the detected defects is provided at the end of the present description of the invention.

According to the present invention, the defect classification module 12 is preferentially configured for summing the obtained weightings for the characteristics of each detected defects and classifying the detected defects from the one having obtained the greatest score or value in said summation, to the one having obtained the smallest score or value. Then the defect classification module 12 may send said list to a maintenance team, or, if there are several maintenance teams, split said list into secondary lists wherein said splitting is performed according to the location of each detected defects so that each secondary list comprises defects within a rail system area for which the maintenance team receiving said secondary list is responsible for. For this purpose, the database of the defect classification module 12 is configured for defining for each maintenance team a specific area of the railway system, the defect classification module being then configured for determining from the location of the detected defect to which area of the railway system said detected defect belongs to, and therefore to which maintenance team it corresponds, so as to be able to create said secondary lists.

According to the present invention, each detected defect of each list might then be displayed on a map of the railway system using a color coding for the ranking of the detected defects in the list, said map being for instance build by the defect detection module 12 and provided to the maintenance team.

As already explained, the ARIS 1 according to the invention might be installed on-board a guided vehicle, like a train, or might be itself an autonomously moving vehicle specifically designed for the inspection, like the robot shown in Fig.
1. In any case, at least the rail defect detection system 10 and the processing unit 11 are installed on-board a vehicle configured for moving over the rail to be inspected. If the ARIS is a robot as shown in Fig. 1, then the ARIS 1 is itself said vehicle configured for moving over the rail to be inspecting and further comprises a frame or body 3 in, or on, which is installed at least the rail defect detection system 10 configured for inspecting the rails 21 of the track 2, the processing unit 11, and said another communication device 14 for communicating with the communication device 13 of the defect classification module 12. The ARIS 1 according to the invention preferentially further comprises moving means like a motor driving wheels 4, said moving means cooperating with automatic and autonomous detection means, like a radar system and/or a LIDAR system and/or a camera system, for enabling an autonomous, independent, and safe moving of the body 3 along the track comprising the rails 21. For instance, the ARIS 1 may comprise control means for controlling said moving means in function of detected obstacle, railway beacons, signals, trackside device information, or any other collected and/or received information regarding track availability for a safe moving of the robot. The ARIS 1 is thus preferentially a driverless system that does not require to be driven or controlled by an operator. For instance, the processing unit 11 according to the invention might be configured, in addition to its tasks related to the inspection of each rail, for autonomously driving the ARIS 1 along the track by controlling the moving means, by communicating with trackside devices and/or a control center and/or other guided vehicles, by capturing information from the surrounding of the robot using for instance camera systems and/or radars. Of course, it might be possible for an operator to remotely take the lead and drive and control the ARIS 1 according to the invention if needed.

The ARIS 1 system may comprise a connection to a power source and/or a power source for its powering, for instance for powering the moving means and/or the rail inspection system 10, and/or the processing unit 11, and/or the communication device 14 and/or the defect classification module 12 if installed within the robot. The motor of said moving means is in particular configured for converting the power of the power source into mechanical energy capable of moving the body 3, and therefore the autonomous ARIS 1 over the rails 21. Preferentially, the motor converts the power of the power source, e.g. electric power, into a mechanical energy that makes a shaft rotating, and wherein the rotation of said shaft drives at least one wheel 4 into rotation, wherein each wheel 4 supporting the body 3 moves over the rails 21 which serve as support for the ARIS 1.

To summarize, the present invention proposes a system and a method for automatically inspecting a rail in order to detect defects of said rail and creating at least one list of detected defects wherein said defects are classified according to an order according to which they have to be repaired in order to optimize the efficiency of a maintenance team and ensuring the safety of a railway system.

### Example of classification of detected defects:

In the following, an example of a classification of detected defects by the ARIS is provided. According to the present invention, weightings automatically associated to characteristics of the detected defects by the ARIS are preferentially used for determining a ranking among the detected defects. The present example illustrates a classification of three defects detected by the ARIS using the weighting method.

Let's consider a railway network with a highest number NH = 15 trains per hour moving over a location X1 of track of said railway network. A defect detected at said location X1 would be associated to a weighting L1 = 40. NH represents the highest cadency of the trains for said railway network. For this railway network, we will suppose that the ARIS will detect 3 defects, respectively a first defect, a second defect and a third defect, and classify said detected defects using weightings associated to the characteristics determined for each of the detected defects as follows:
The processing unit 11 of the ARIS is configured for determining the characteristics of the detected defects from the measurement data. The obtained characteristics are for instance as follows:
First defect: a defect with maximum extension of 25 cm on the surface of the rail head, at a location of the railway network wherein 2 trains per hour are moving.
Second defect: a defect with maximum extension of 15 cm on the surface of the rail head and 2 cm inside the rail head, at a location of the railway network wherein 4 trains per hour are moving.
Third defect: a defect with maximum extension of 5 cm from the surface of the rail web further extending inside the rail foot, cracks inside the web rail extending to the rail foot, the defect being located at a location wherein 10 trains per hour are moving.

Then, the defect classification module 12 is preferentially configured for using weightings in order to classify the detected defects. For this purpose a weighting will be associated to each detected defect characteristic by the defect classification module 12. In particular, the defect classification module is configured for comparing the defect characteristics in order to determine the value S_G. The weightings obtained by the defect classification module might be as follows:

### First defect:

- the first defect measures 25 cm. It is the greatest value among the lengths measured for the three detected defects. This means that S_G = 25 cm. Accordingly, the weighting associated to the length of the first defect is W1 = 50;
- it is a surface defect. This characteristic is for instance associated to a weighting P1 = 5;
- it is a rail head defect. This defect characteristic is for instance associated to a weighting P3 = 12;
- it is located at a location Li where 2 trains per hour are moving, i.e. Ni = 2. The calculation of the weighting Li associated to this location is given by Li = Ni/NH·L1, i.e. Li = 2/15·40 = 5.33.

The defect classification module automatically calculates the sum of the weightings for the first defect, which gives 50+5+12+5.33 = 72.33.

### Second defect:

- the second defect measures Si = 15 cm. The weighting Wi associated to its length is automatically calculated by the defect classification module according to: Wi= S_i/S_G·W1= 15/25·50=30.
- it is a surface defect: P1 = 5.
- it is also an internal defect: P2 = 8
- it is a rail head defect: P3 = 12;
- it is located at a location where 4 trains per hour are moving: Li = Ni/NH·L1 = 4/15·40 = 10.66.

The defect classification module automatically calculates the sum of the weightings for the second defect, which gives 30+5+8+12+10.66 = 65.66.

### Third defect:

- its length is Si = 10 cm, which gives rise to the calculation of the following value for Wi by the defect classification module: Wi = 20.
- it is a surface defect: P1 = 5.
- it is also an internal defect: P2 = 8.
- it belongs to the web: P4 = 12.
- it belongs also to the foot: P5 = 7.
- it is located at a location where 10 trains per hour are moving: Li = 10/15·40 = 26.66

The defect classification module automatically calculates the sum of the weightings for the third defect, which gives: 78.66.

Finally, the defect classification module automatically rank the detected defects according to their weightings in order to determine the order of repair of said detected defects, giving rise to the following list of detected defects and order of repair:
1. Third defect
2. First defect
3. Second defect

Of course, the present invention is not limited to a classification of 3 detected defects, but is able to classify a higher number of detected defects. Additionally, the values provided for the weightings might be adapted by the skilled man in order to rank differently the detected defects according to the present invention.

## Claims

1. Automatic Rail Inspection System - hereafter ARIS - (1) for automatically inspecting a rail (21) of a railway system, detecting, locating and classifying rail defects, the ARIS (1) comprising:
- a rail defect detection system (10) for automatically detecting a rail defect, said rail defect detection system (10) outputting measurement data related to its inspection of the rail (21);
- a processing unit (11) configured for analyzing the measurement data in order to automatically determine for each detected defect a defect characteristic;
**characterized in that**
- a defect classification module (12) configured for classifying the detected defect in a list of detected defects in function of the determined defect characteristic, wherein said list establishing a ranking among all detected defects, said ranking representing an order of repair according to which the detected defects have to be repaired, the classification of the detected defects in said list being thus configured for defining said order of repair for the detected defects.

2. ARIS (1) according to claim 1, wherein at least the following defect characteristics are automatically determined: a physical size of the detected defect, a position of the detected defect with respect to a rail structure, and a location of the detected defect with respect to the railway system.

3. ARIS (1) according to claim 2, wherein one or several of the following physical size characteristics of the detected defect are determined by the processing unit:
- a maximum length of the detected defect;
- an area occupied by the detected defect;
- a volume occupied by the detected defect.

4. ARIS (1) according to claim 2 or 3, wherein the position defect characteristic is designed for defining if the detected defect is located:
- on and/or within the head 211 of the rail; and/or
- on and/or within the foot 212 of the rail; and/or
- on and/or within the web 213 of the rail.

5. ARIS (1) according to one of the claims 1-4, wherein the defect classification module (12) comprises a database, wherein weightings for the defect characteristics are stored and used for said classification.

6. ARIS (1) according to claim 5, wherein the defect classification module (12) is configured for associating a weighting to each defect characteristic and ranking the detected defect in said list according to the value of the sum of the weightings obtained for the characteristics characterizing the detected defect.

7. ARIS (1) according to claim 5 or 6, wherein each weighting is predetermined in the database or calculated by the defect classification module (12).

8. ARIS (1) according to one of the claims 1 to 7, wherein the defect classification module (12) is configured for automatically updating in real time the list each time a new defect is detected and sending said list and any update of the list to a communication device of a maintenance team.

9. ARIS (1) according to one of the claims 1 to 8, wherein the defect classification module (12) is configured for splitting said list in secondary lists in function of a location of the detected defect within the railway system, wherein the number of secondary lists equals a number of available maintenance teams, wherein each secondary list only comprises detected defects whose respective locations are within a set of locations for which one of said maintenance team is responsible for.

10. ARIS (1) according to one of the claims 1 to 9, wherein the rail defect detection system (10) and the processing unit (11) are installed on-board a guided vehicle and the defect classification module (12) is located at a remote position compared to said guided vehicle.

11. ARIS (1) according to claim 10 wherein said guided vehicle is an autonomous mobile robot.

12. ARIS (1) according to one of the claims 1 to 11, wherein the defect classification module (12) comprises a communication device (13) for exchanging data with another communication device (14) connected to the processing unit (11) or another communication device equipping a vehicle of a maintenance team.

13. Method for automatically inspecting a rail (21) of a railway system, detecting, locating and classifying rail defects, the method comprising:
- using an automatic rail inspection system - hereafter ARIS - (1) for detecting and locating defects of the rail (21) of a track (2) of said railway system for guided vehicles;
- determining for each detected defect a defect characteristic;
**characterized in that** it comprises
- automatically classifying the detected defect in a list of detected defects in function of the determined defect characteristic, wherein said list establishing a ranking among all detected defects, said ranking representing an order of repair according to which the detected defects have to be repaired, the classification of the detected defects in said list being thus configured for defining said order of repair for the detected defects.

14. Method according to claim 13, comprising updating in real time said list at each new detected defect and automatically transmitting in real time said list and any new update of the list to a maintenance team.

15. Method according to claim 13 or 14, comprising associating a weighting to each characteristic of each detected defect and summing for each detected defect the weightings associated to its characteristics in order to classify the detected defect in said list according to the value of the obtained sum.

## Patentansprüche

1. Automatisches Schienenprüfsystem (1), nachfolgend ASPS genannt, zum automatischen Prüfen einer Schiene (21) eines Schienennetzes, das Schienendefekte erkennt, ortet und klassifiziert, wobei das ASPS (1) Folgendes umfasst:
- ein Schienendefekterkennungssystem (10) zum automatischen Erkennen eines Schienendefekts, das Messdaten bezüglich seiner Prüfung der Schiene (21) ausgibt,
- eine Verarbeitungseinheit (11), die so konfiguriert ist, dass sie die Messdaten analysiert, um automatisch für jeden erkannten Defekt ein Defektmerkmal zu ermitteln,
**dadurch gekennzeichnet, dass**
- ein Defektklassifizierungsmodul (12), das so konfiguriert ist, dass es den erkannten Defekt in Abhängigkeit von dem ermittelten Defektmerkmal in einer Liste erkannter Defekte klassifiziert, wobei die Liste unter allen erkannten Defekten eine Rangfolge festlegt, die eine Reihenfolge für die Reparatur darstellt, gemäß der die erkannten Defekte zu reparieren sind, wobei die Klassifizierung der erkannten Defekte in der Liste somit so konfiguriert ist, dass sie die Reihenfolge für die Reparatur der erkannten Defekte festlegt.

2. ASPS (1) nach Anspruch 1, wobei zumindest die folgenden Defektmerkmale automatisch ermittelt werden: eine physische Größe des erkannten Defekts, eine Lage des erkannten Defekts in Bezug auf eine Schienenkonstruktion und ein Standort des erkannten Defekts in Bezug auf das Schienennetz.

3. ASPS (1) nach Anspruch 2, wobei ein oder mehrere der folgenden physischen Größenmerkmale des erkannten Defekts von der Verarbeitungseinheit ermittelt werden:
- eine maximale Länge des erkannten Defekts,
- eine von dem erkannten Defekt in Anspruch genommene Fläche,
- ein von dem erkannten Defekt in Anspruch genommenes Volumen.

4. ASPS (1) nach Anspruch 2 oder 3, wobei das Lage-Defektmerkmal zum Festlegen dient, ob sich der erkannte Defekt:
- am und/oder im Kopf 211 der Schiene und/oder
- am und/oder im Fuß 212 der Schiene und/oder
- am und/oder im Steg 213 der Schiene befindet.

5. ASPS (1) nach einem der Ansprüche 1 bis 4, wobei das Defektklassifizierungsmodul (12) eine Datenbank umfasst, wobei Gewichtungen für die Defektmerkmale gespeichert und für die Klassifizierung benutzt werden.

6. ASPS (1) nach Anspruch 5, wobei das Defektklassifizierungsmodul (12) so konfiguriert ist, dass es jedes Defektmerkmal mit einer Gewichtung verknüpft und den erkannten Defekt in der Liste gemäß dem Wert der Summe der Gewichtungen einstuft, die für die den erkannten Defekt beschreibenden Merkmale erhalten werden.

7. ASPS (1) nach Anspruch 5 oder 6, wobei jede Gewichtung in der Datenbank vorgegeben ist oder von dem Defektklassifizierungsmodul (12) berechnet wird.

8. ASPS (1) nach einem der Ansprüche 1 bis 7, wobei das Defektklassifizierungsmodul (12) so konfiguriert ist, dass es die Liste jedes Mal, wenn ein neuer Defekt erkannt wird, in Echtzeit automatisch aktualisiert und die Liste und sämtliche Aktualisierungen der Liste zu einer Kommunikationsvorrichtung eines Wartungsteams sendet.

9. ASPS (1) nach einem der Ansprüche 1 bis 8, wobei das Defektklassifizierungsmodul (12) so konfiguriert ist, dass es die Liste in Abhängigkeit von einem Standort des erkannten Defekts in dem Schienennetz in Teillisten unterteilt, wobei die Anzahl der Teillisten einer Anzahl verfügbarer Wartungsteams entspricht, wobei jede Teilliste nur erkannte Defekte umfasst, deren jeweiliger Standort sich innerhalb eines Satzes Standorte befindet, für die eines der Wartungsteams zuständig ist.

10. ASPS (1) nach einem der Ansprüche 1 bis 9, wobei das Schienendefekterkennungssystem (10) und die Verarbeitungseinheit (11) an Bord eines spurgebundenen Fahrzeugs eingebaut sind und sich das Defektklassifizierungsmodul (12) in Bezug auf das spurgebundene Fahrzeug an einem entfernt gelegenen Standort befindet.

11. ASPS (1) nach Anspruch 10, wobei es sich bei dem spurgebundenen Fahrzeug um einen autonomen mobilen Roboter handelt.

12. ASPS (1) nach einem der Ansprüche 1 bis 11, wobei das Defektklassifizierungsmodul (12) eine Kommunikationsvorrichtung (13) für den Datenaustausch mit einer weiteren Kommunikationsvorrichtung (14) umfasst, die mit der Verarbeitungseinheit (11) oder einer weiteren Kommunikationsvorrichtung verbunden ist, mit der ein Fahrzeug eines Wartungsteams ausgestattet ist.

13. Verfahren zum automatischen Prüfen einer Schiene (21) eines Schienennetzes, das Schienendefekte erkennt, ortet und klassifiziert, wobei das Verfahren Folgendes umfasst:
- Benutzen eines automatischen Schienenprüfsystems (1), nachfolgend ASPS genannt, zum Erkennen und Orten von Defekten der Schiene (21) eines Gleises (2) des Schienennetzes für spurgebundene Fahrzeuge,
- Ermitteln eines Defektmerkmals für jeden erkannten Defekt,
**dadurch gekennzeichnet, dass** es Folgendes umfasst:
- automatisches Klassifizieren des erkannten Defekts in einer Liste erkannter Defekte in Abhängigkeit von dem ermittelten Defektmerkmal, wobei die Liste unter allen erkannten Defekten eine Rangfolge festlegt, die eine Reihenfolge für die Reparatur darstellt, gemäß der die erkannten Defekte zu reparieren sind, wobei die Klassifizierung der erkannten Defekte in der Liste somit so konfiguriert ist, dass sie die Reihenfolge für die Reparatur der erkannten Defekte festlegt.

14. Verfahren nach Anspruch 13, das das Aktualisieren der Liste in Echtzeit bei jedem neuen erkannten Defekt und das automatische Übermitteln der Liste und sämtlicher neuer Aktualisierungen der Liste in Echtzeit an ein Wartungsteam umfasst.

15. Verfahren nach Anspruch 13 oder 14, das das Verknüpfen einer Gewichtung mit jedem Merkmal jedes erkannten Defekts und das Summieren der mit seinen Merkmalen verknüpften Gewichtungen für jeden erkannten Defekt umfasst, um den erkannten Defekt in der Liste gemäß dem Wert der gewonnenen Summe zu klassifizieren.

## Revendications

1. Système d'inspection automatique de rail - ci-après ARIS - (1) pour automatiquement inspecter un rail (21) d'un système ferroviaire, détecter, localiser et classer des défauts de rail, l'ARIS (1) comprenant :
- un système de détection de défaut de rail (10) pour détecter automatiquement un défaut de rail, ledit système de détection de défaut de rail (10) délivrant en sortie des données de mesure se rapportant à son inspection du rail (21) ;
- une unité de traitement (11) configurée pour analyser les données de mesure afin de déterminer automatiquement pour chaque défaut détecté une caractéristique de défaut ;
**caractérisé par**
- un module de classification de défaut (12) configuré pour classer le défaut détecté dans une liste de défauts détectés en fonction de la caractéristique de défaut déterminée, dans lequel ladite liste établissant une hiérarchisation entre tous les défauts détectés, ladite hiérarchisation représentant un ordre de réparation selon lequel les défauts détectés doivent être réparés, la classification des défauts détectés dans ladite liste étant ainsi configurée pour définir ledit ordre de réparation pour les défauts détectés.

2. ARIS (1) selon la revendication 1, dans lequel au moins les caractéristiques de défaut suivantes sont automatiquement déterminées : une taille physique du défaut détecté, une position du défaut détecté par rapport à une structure de rail, et une localisation du défaut détecté par rapport au système ferroviaire.

3. ARIS (1) selon la revendication 2, dans lequel l'une ou plusieurs des caractéristiques de taille physique suivantes du défaut détecté sont déterminées par l'unité de traitement :
- une longueur maximale du défaut détecté ;
- une aire occupée par le défaut détecté ;
- un volume occupé par le défaut détecté.

4. ARIS (1) selon la revendication 2 ou 3, dans lequel la caractéristique de défaut de position est conçue pour définir si le défaut détecté est localisé :
- sur et/ou au sein du champignon 211 du rail ; et/ou
- sur et/ou au sein du patin 212 du rail ; et/ou
- sur et/ou au sein de l'âme 213 du rail.

5. ARIS (1) selon l'une des revendications 1 à 4, dans lequel le module de classification de défaut (12) comprend une base de données, dans laquelle des pondérations pour les caractéristiques de défaut sont stockées et utilisées pour ladite classification.

6. ARIS (1) selon la revendication 5, dans lequel le module de classification de défaut (12) est configuré pour associer une pondération à chaque caractéristique de défaut et hiérarchiser le défaut détecté dans ladite liste selon la valeur de la somme des pondérations obtenues pour les caractéristiques caractérisant le défaut détecté.

7. ARIS (1) selon la revendication 5 ou 6, dans lequel chaque pondération est prédéterminée dans la base de données ou calculée par le module de classification de défaut (12).

8. ARIS (1) selon l'une des revendications 1 à 7, dans lequel le module de classification de défaut (12) est configuré pour mettre à jour automatiquement en temps réel la liste chaque fois qu'un nouveau défaut est détecté et envoyer ladite liste et toute mise à jour de la liste à un dispositif de communication d'une équipe de maintenance.

9. ARIS (1) selon l'une des revendications 1 à 8, dans lequel le module de classification de défaut (12) est configuré pour scinder ladite liste en listes secondaires en fonction d'une localisation du défaut détecté au sein du système ferroviaire, dans lequel le nombre de listes secondaires est égal à un nombre d'équipes de maintenance disponibles, dans lequel chaque liste secondaire comprend uniquement des défauts détectés dont les localisations respectives sont au sein d'un ensemble de localisations pour lesquelles l'une de ladite équipe de maintenance est responsable.

10. ARIS (1) selon l'une des revendications 1 à 9, dans lequel le système de détection de défaut de rail (10) et l'unité de traitement (11) sont installés à bord d'un véhicule guidé et le module de classification de défaut (12) est localisé à une position distante comparativement audit véhicule guidé.

11. ARIS (1) selon la revendication 10 dans lequel ledit véhicule guidé est un robot mobile autonome.

12. ARIS (1) selon l'une des revendications 1 à 11, dans lequel le module de classification de défaut (12) comprend un dispositif de communication (13) pour échanger des données avec un autre dispositif de communication (14) connecté à l'unité de traitement (11) ou un autre dispositif de communication équipant un véhicule d'une équipe de maintenance.

13. Procédé pour automatiquement inspecter un rail (21) d'un système ferroviaire, détecter, localiser et classer des défauts de rail, le procédé comprenant :
- l'utilisation d'un système d'inspection automatique de rail - ci-après ARIS - (1) pour détecter et localiser des défauts du rail (21) d'une voie (2) dudit système ferroviaire pour véhicules guidés ;
- la détermination, pour chaque défaut détecté, d'une caractéristique de défaut ;
**caractérisé en ce qu'**il comprend
- la classification automatique du défaut détecté dans une liste de défauts détectés en fonction de la caractéristique de défaut déterminée, dans lequel ladite liste établissant une hiérarchisation entre tous les défauts détectés, ladite hiérarchisation représentant un ordre de réparation selon lequel les défauts détectés doivent être réparés, la classification des défauts détectés dans ladite liste étant ainsi configurée pour définir ledit ordre de réparation pour les défauts détectés.

14. Procédé selon la revendication 13, comprenant la mise à jour en temps réel de ladite liste à chaque nouveau défaut détecté et la transmission automatique en temps réel de ladite liste et de toute nouvelle mise à jour de la liste à une équipe de maintenance.

15. Procédé selon la revendication 13 ou 14, comprenant l'association d'une pondération à chaque caractéristique de chaque défaut détecté et la sommation, pour chaque défaut détecté, des pondérations associées à ses caractéristiques afin de classer le défaut détecté dans ladite liste selon la valeur de la somme obtenue.
